# FASCICULE DE BREVET EUROPEEN

(11) **EP 3 154 402 B1**
(45) Date de publication et mention de la délivrance du brevet: **07.07.2021**
(21) Numéro de dépôt: 15729552.8
(22) Date de dépôt: 02.06.2015
(51) Int. Cl.: A47J 27/04, A23L 2/04, A47J 27/086, A47J 27/092

(54) **APPAREIL ET PROCÉDÉ D'EXTRACTION DE JUS À PARTIR D'ALIMENTS**
VORRICHTUNG UND VERFAHREN ZUR EXTRAKTION VON SAFT AUS LEBENSMITTELN
DEVICE AND METHOD FOR EXTRACTING JUICE FROM FOOD

(30) Priorité: 10.06.2014 FR 1455254
(43) Date de publication de la demande: 19.04.2017
(73) Titulaire: SEB S.A., 69130 Ecully (FR)
(72) Inventeur: BLONDEL, Mathilde, 21120 Dienay (FR)
(74) Mandataire: SEB Développement
(86) Numéro de dépôt international: PCT/FR2015/051454
(87) Numéro de publication internationale: WO 2015/189498

(56) Documents cités:
- EP-A1- 2 208 448
- WO-A1-2008/029976
- WO-A1-2012/056173
- US-A- 2 622 186
- CHEN X ET AL: "Manufacturing Gastrodia elata preserved fruit, comprises e.g. washing and peeling the Gastrodia elata, slicing the peeled Gastrodia elata, preboiling the Gastrodia elata, and boiling sucrose aqueous solution", WPI / THOMSON,, vol. 2013, no. 23, 7 novembre 2012 (2012-11-07), XP002741027,
- None

## Description

La présente invention concerne de manière générale un appareil et un procédé d'extraction de jus à partir d'aliments à préparer.

Il est connu dans l'art antérieur des dispositifs d'extraction de jus à partir d'aliments, tels que celui décrit dans le document US20110183035 par exemple. En contrepartie, ce système présente notamment l'inconvénient de proposer un cycle total d'extraction qui dure plus de quatre heures, ce qui pénalise une utilisation quotidienne, car l'utilisateur doit prévoir longtemps à l'avance de lancer la préparation des aliments, ce qui est de moins en moins compatible avec les exigences de la vie active. De plus, une si longue préparation risque d'altérer les bienfaits des jus extraits des aliments. Le document US 2 622 186 A montre un autoclave qui présente un processus de régulation de la température. Des procédés d'extraction de jus sous vide sont également connus.

Le document KR101106590 présente lui aussi un appareil d'extraction de jus, mais avec une multitude de récipients qui s'emboitent les uns dans les autres. En d'autres termes, la structure de cet appareil est complexe, et cependant, rien ne garantit que les jus extraits seront préservés de l'ambiance de vapeur et d'air sous pression qui peut dégrader par oxydation ou diluer éventuellement les jus extraits.

Un but de la présente invention est de répondre aux inconvénients des documents de l'art antérieur mentionnés ci-dessus et en particulier, tout d'abord, de proposer un appareil d'extraction de jus à partir d'aliments à préparer qui permet d'extraire une quantité de jus optimale dans un temps de cuisson minimum, sans pour autant risquer d'altérer la qualité du jus extrait.

Pour cela un premier aspect de l'invention concerne un appareil d'extraction de jus, agencé pour extraire des jus à partir d'aliments à préparer en les exposant à une ambiance de vapeur sous pression, comprenant :
- une enceinte d'extraction agencée pour recevoir les aliments à préparer et les exposer à une ambiance de vapeur sous pression,
- des moyens de chauffage de l'enceinte d'extraction,
- des moyens de génération de vapeur dans l'enceinte d'extraction,
- des moyens de mise sous pression de l'enceinte d'extraction,
caractérisé en ce que l'appareil comprend des moyens de mesure d'un temps de préparation de l'enceinte d'extraction associés à des moyens de décompression de l'enceinte d'extraction, agencés pour :
- opérer, après un premier temps de préparation prédéterminé pendant lequel les aliments à préparer sont chauffés et exposés à l'ambiance de vapeur sous pression, une décompression de l'enceinte d'extraction pendant un deuxième temps de préparation,
- re-comprimer ensuite l'enceinte d'extraction et continuer à chauffer et à exposer les aliments à préparer à l'ambiance de vapeur sous pression pendant un troisième temps de préparation.

L'appareil selon la présente mise en œuvre est spécialement agencé pour opérer une décompression après un premier temps de préparation. Cette décompression permet de chasser l'air des moyens de mise sous pression, ce qui a deux effets bénéfiques sur l'extraction de jus.

D'une part, le cycle total de cuisson (ou d'extraction) est raccourci, car l'air sous pression est un frein aux échanges thermiques à l'intérieur de l'appareil et limite l'efficacité du chauffage de l'enceinte d'extraction. La demanderesse s'est aperçue qu'une telle décompression permettait de raccourcir la durée totale d'extraction à un temps total inférieur à deux heures et quinze minutes, et même inférieur à deux heures.

D'autre part, la décompression permet de chasser l'air présent dans et autour de l'enceinte d'extraction, ce qui signifie que l'atmosphère est appauvrie en oxygène. En effet, lors de la re-compression ultérieure, l'air est remplacé par de la vapeur d'eau, et les jus extraits seront moins ou pas du tout oxydés, puisque l'atmosphère est pauvre en oxygène.

Il est à noter que l'enceinte d'extraction et les aliments qui y sont contenus ne sont pas exposés à des jets de vapeur sous pression, mais à une ambiance sous pression contenant de la vapeur d'eau. Il n'y a pas de convection forcée, ni ventilateur pour créer un flux d'air chaud saturé en vapeur : l'appareil reste simple dans sa fabrication, mais permet toutefois avec les moyens de décompression de raccourcir notablement le temps total d'extraction.

Avantageusement :
- l'appareil d'extraction de jus comprend une enceinte principale agencée pour recevoir l'enceinte d'extraction et l'exposer à l'ambiance de vapeur sous pression,
- l'enceinte d'extraction comprend un pot et un couvercle de pot, le couvercle de pot étant formé par une paroi avec une surface supérieure, le couvercle de pot comprenant des évents dans la paroi, dépassant de la surface supérieure d'une hauteur prédéterminée. Selon cette mise en œuvre, l'enceinte d'extraction comprend des évents sur la surface supérieure du couvercle de pot et qui sont en protubérance. Cela permet d'éviter que la condensation qui se crée inévitablement lors des montées en température et notamment sur le couvercle de pot car il est plus froid que l'ambiance de vapeur sous pression, ne tombe dans l'enceinte d'extraction et ne dilue les jus extraits des aliments.

Avantageusement, l'enceinte d'extraction comprend un joint d'étanchéité entre le pot et le couvercle de pot. Cette mise en œuvre limite également les entrées de condensation dans l'enceinte d'extraction et/ou les entrées d'eau liquide, notamment au moment de la décompression.

Avantageusement, les moyens de décompression sont une électrovanne. Autrement dit, l'invention prévoit de piloter activement la décompression de l'enceinte d'extraction après un certain temps de cuisson ou de préparation, lorsque les conditions de pression et/ou de température à l'intérieur de l'enceinte d'extraction sont optimales pour chasser l'air et le remplacer par de la vapeur d'eau.

Alternativement, les moyens de décompression sont une bille actionnée par un doigt commandé par un électro-aimant.

Avantageusement, l'enceinte d'extraction comprend une grille agencée pour séparer un volume inférieur de l'enceinte d'extraction, dédié à recevoir un jus, d'un volume supérieur de l'enceinte d'extraction, dédié à recevoir les aliments à préparer, et le volume inférieur représente moins de 30% de la somme du volume inférieur et du volume supérieur, avantageusement moins de 20% et très avantageusement entre 10% et 15% de la somme du volume inférieur et du volume supérieur. En d'autres termes, si l'enceinte d'extraction est cylindrique, la grille (et plus précisément la surface supérieure de la grille) est agencée à une distance du fond comprise entre 10% et 15% de la hauteur totale de l'enceinte d'extraction.

Avantageusement, la grille repose sur au moins une saillie de l'enceinte d'extraction.

En alternative, la grille repose sur les bords du pot d'extraction.

Avantageusement, l'enceinte d'extraction est en céramique ou en tôle revêtue ou nue. Par exemple, l'enceinte d'extraction peut être en tôle émaillée.

Un deuxième aspect de l'invention concerne un procédé d'extraction de jus à partir d'aliments à préparer, comprenant les étapes consistant à :
- placer les aliments à préparer dans une enceinte d'extraction,
- chauffer et exposer les aliments à préparer à une ambiance de vapeur sous pression pendant un premier temps de préparation,
- opérer une décompression de l'enceinte d'extraction pendant un deuxième temps de préparation,
- chauffer et exposer les aliments à préparer à une ambiance de vapeur sous pression pendant un troisième temps de préparation.

Avantageusement, le premier temps de préparation est compris entre 4 et 20 minutes (bornes incluses), et le deuxième temps de préparation est inférieur à 2 minutes. Encore plus avantageusement, le premier temps de préparation est compris entre 7 et 15 minutes (bornes incluses). Ce premier temps de préparation permet de mettre l'enceinte principale sous pression et de commencer à générer de la vapeur d'eau en quantité suffisante dans l'enceinte d'extraction. La décompression que l'on opère alors permet à la vapeur d'eau de chasser l'air contenu et d'améliorer le chauffage ultérieur et d'obtenir une atmosphère appauvrie en oxygène. Encore plus avantageusement, le deuxième temps de préparation est inférieur à 35 secondes.

Avantageusement, les aliments à préparer sont chauffés pendant le troisième temps de préparation à une température comprise entre 105°C et 120°C (bornes incluses). Encore plus avantageusement, les aliments à préparer sont chauffés à une température comprise entre 112°C et 117°C (bornes incluses).

Un troisième aspect de l'invention concerne un procédé d'extraction de jus à partir d'aliments à préparer, comprenant les étapes consistant à :
- placer les aliments à préparer dans une enceinte d'extraction,
- chauffer et exposer les aliments à préparer à une ambiance de vapeur sous pression jusqu'à atteindre une température prédéterminée et/ou une pression prédéterminée dans l'enceinte d'extraction,
- opérer une décompression de l'enceinte d'extraction,
- chauffer et exposer les aliments à préparer à une ambiance de vapeur sous pression. De la même manière que le deuxième aspect, le troisième aspect de l'invention comprend une décompression après une première phase de chauffage, ce qui a pour effet de chasser l'air et le remplacer par de la vapeur d'eau, pour améliorer les échanges thermiques (et raccourcir le temps total d'extraction) et limiter les risques d'oxydation des jus extraits ensuite. Le deuxième aspect opère cette décompression après un temps donné, alors qu'en alternative, le troisième aspect opère la décompression lorsque les conditions de température et/ou de pression dans l'enceinte d'extraction atteignent un seuil.

Avantageusement, la température prédéterminée est comprise entre 30°C et 120°C et avantageusement entre 60°C et 80°C, bornes comprises. A cet effet, l'appareil d'extraction peut comprendre un capteur de température, ou un contacteur piloté par la température, pour piloter une vanne de décompression.

Avantageusement, la pression prédéterminée est comprise entre 1100 mbar et 2000 mbar, et avantageusement entre 1100 mbar et 1400 mbar, bornes comprises. A cet effet, l'appareil d'extraction peut comprendre un capteur de pression, ou un contacteur piloté par la pression, pour piloter une vanne de décompression.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un appareil d'extraction de jus selon la présente invention, pendant un premier temps de préparation au cours duquel une mise en température est effectuée ;
- la figure 2 représente l'appareil d'extraction de jus de la figure 1, pendant un deuxième temps de préparation au cours duquel une décompression est effectuée ;
- la figure 3 représente l'appareil d'extraction de jus de la figure 1, pendant un troisième temps de préparation au cours duquel une extraction de jus est effectuée.

Dans la présente demande, on fait mention d'un appareil d'extraction de jus, mais on peut également parler d'un appareil de cuisson pour extraire des jus à partir d'aliments à préparer.

On fait également mention d'une exposition des aliments à préparer à une ambiance de vapeur sous pression, il faut comprendre qu'il s'agit de créer des conditions de pression et de température autour des aliments à préparer de sorte à faire s'échapper de la vapeur qui entraîne avec elle des composants des aliments à préparer. Il n'y a donc pas d'exposition à un jet de vapeur sous pression, ni à un courant forcé par un ventilateur par exemple.

Les températures mentionnées sont celles de l'ambiance de vapeur et sont mesurées à l'intérieur de l'enceinte d'extraction, à l'endroit où sont placés les aliments à préparer.

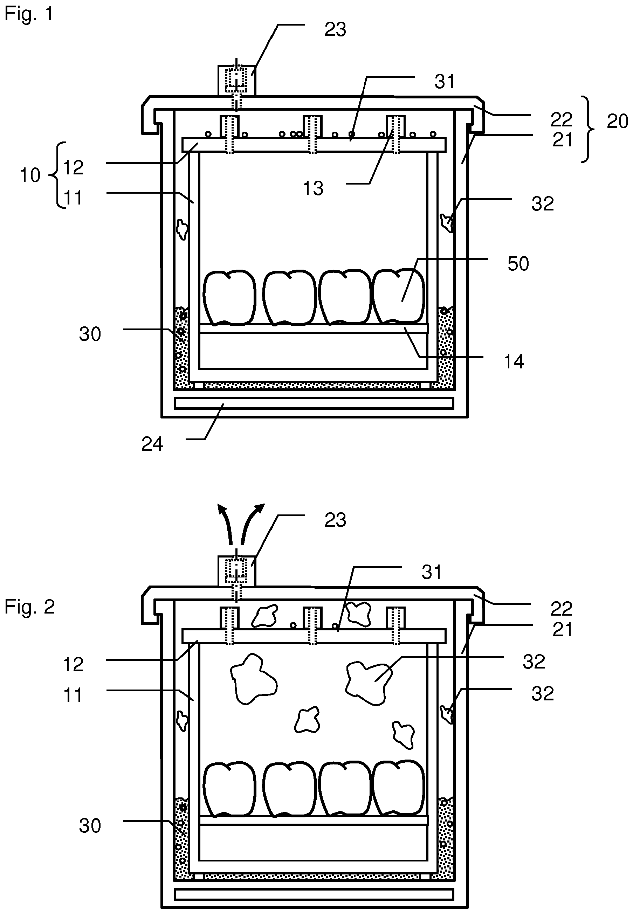

La figure 1 représente un appareil d'extraction de jus selon la présente invention. Une enceinte principale 20 comprend une cuve de chauffe 21 et un couvercle principal 22, agencé pour fermer de manière étanche la cuve de chauffe 21. Le couvercle principal 22 peut s'accoupler à la cuve de chauffe par une interface à baïonnette par exemple, et comprend une soupape 23 qui comprend notamment une électrovanne.

La cuve de chauffe 21 peut accueillir une enceinte d'extraction 10 qui contient des fruits 50, et qui comprend un pot 11, un couvercle de pot 12 et une grille 14 à l'intérieur du pot 11, qui supporte les fruits 50 (des pommes par exemple).

De l'eau 30 est disposée dans le fond de la cuve de chauffe 21 et baigne la partie inférieure du pot 11. La cuve de chauffe 21 comprend des moyens de chauffage, ici une résistance électrique 24 qui a pour effet de chauffer le pot 11 et l'eau 30. De l'eau 30 peut bien sûr s'immiscer entre la paroi inférieure du pot 11 et le fond de la cuve de chauffe 21, en raison des pieds qui sont présents sur la face inférieure du pot 11.

La figure 1 représente l'appareil d'extraction de jus pendant un premier temps de préparation, et plus précisément, lors de la phase de montée en température après chargement et allumage de l'appareil par l'utilisateur. Pendant ce premier temps de préparation, la résistance électrique 24 fournit de la chaleur à l'appareil dont les composants internes commencent à chauffer. En particulier, l'eau 30 entre la cuve de chauffe 21 et le pot 11 monte en température, commence à bouillir et produit un peu de vapeur d'eau 32. La consigne de température à atteindre dans la cuve de chauffe 21 est comprise entre 105°C et 120°C, et plus particulièrement entre 112°C et 117°C, bornes incluses.

La pression commence à augmenter dans tout l'espace interne de l'appareil, c'est-à-dire l'espace de la cuve de chauffe 21 fermé par le couvercle principal 22, et le pot 11 fermé par le couvercle de pot 12. La soupape 23 du couvercle principal 22 est réglée ou tarée pour ne s'ouvrir qu'au delà d'une certaine pression, par exemple comprise entre 1500 mbar et 1800 mbar, bornes incluses.

En raison de la température du couvercle de pot 12 qui est à ce moment encore faible, des gouttes de condensation 31 se forment sur le couvercle de pot 12, comme représenté (de la condensation peut également se former à d'autres endroits, mais elle n'est pas représentée). Pour permettre un équilibrage des pressions entre la cuve de chauffe 21 et le pot 11, le couvercle de pot 12 comprend des évents 13, mais ceux-ci sont en protubérance par rapport à la surface supérieure du couvercle de pot 12, ainsi, les gouttes de condensation 31 qui sont sur la surface supérieure du couvercle de pot 12 ne peuvent pas tomber dans le pot 11, ce qui évite de diluer les jus qui seront extraits des fruits 50.

La figure 2 représente l'appareil de la figure 1 pendant un deuxième temps de préparation. Selon l'invention, une fois que la cuve de chauffe 21 est montée suffisamment en température et en pression, et que de la vapeur d'eau 32 baigne l'ensemble de la cuve de chauffe 21 et du pot 11, une décompression est opérée en ouvrant la soupape 23. Cette dernière peut comprendre une électrovanne par exemple, l'appareil comprend également un minuteur relié à une centrale de commande qui donne un signal de commande à l'électrovanne de s'ouvrir, une fois le premier temps de préparation écoulé, pendant le deuxième temps de préparation.

Pendant ce deuxième temps de préparation, les gaz contenus dans l'espace interne de la cuve de chauffe 21 vont s'échapper, comme le montrent les flèches au niveau de la soupape 23. Ces gaz sont essentiellement de l'air et de la vapeur d'eau. Au cours de la décompression, la vapeur d'eau qui se crée avec l'eau 30 en ébullition va même chasser l'air contenu dans le pot 11 et la cuve de chauffe 21.

Cette décompression va donc permettre de remplacer l'air initialement contenu dans l'espace interne de la cuve de chauffe 21 par de la vapeur d'eau. A la fin du deuxième temps de préparation, la soupape 23 est refermée et le cycle continue avec un troisième temps de préparation au cours duquel les échanges thermiques sont grandement améliorés, car il n'y a quasiment plus d'air, mais de la vapeur d'eau dans l'espace interne de la cuve de chauffe 21 et du pot 11. En d'autres termes, le chauffage du pot 11 est plus efficace et cela permet de réduire le temps total de fonctionnement de l'appareil pour extraire des jus.

Un deuxième avantage de chasser l'air est de chasser l'oxygène qu'il contient, et on obtient une atmosphère appauvrie en oxygène, ce qui limite les oxydations des jus extraits des fruits 50.

Typiquement, pour un pot 11 de hauteur 11cm, de diamètre Ø17.8cm, une cuve de chauffe 21 de hauteur 14cm, de diamètre Ø19cm, une puissance de chauffe de 1000 watts, une masse d'eau 30 initiale de 500g±10% à 20°C±4°C, une masse de 500 g±10% de pommes, le premier temps de préparation peut être compris entre 7 et 15 minutes, et le deuxième temps de préparation peut être inférieur à 45 secondes. On peut par exemple opérer la décompression à 12 minutes, pendant 32 secondes.

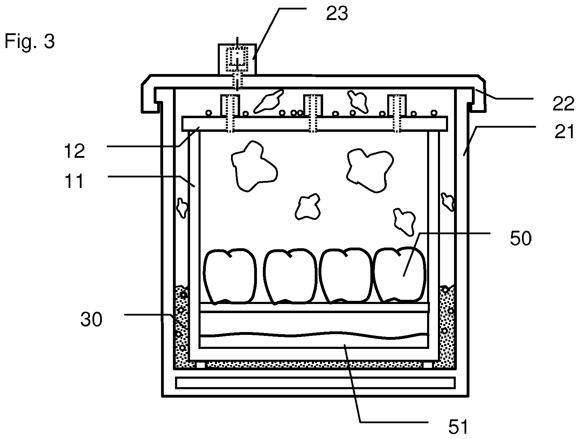

La figure 3 représente l'appareil d'extraction de jus au cours du troisième temps de préparation. Il y a moins de gouttes de condensation 31 à ce moment là, car l'espace interne est équilibré en température et il y a moins de points froids qui provoquent cette condensation, et de la vapeur d'eau 32 occupe tout l'espace interne de la cuve de chauffe 21 et du pot 11.

Des jus 51 s'échappent des fruits 50 et sont recueillis dans le fond du pot 11, sous la grille 14. La demanderesse a déterminé qu'il était avantageux de positionner la grille 14 de sorte à ménager un volume inférieur du pot 11 pour recueillir les jus qui soit inférieur à 30% du volume total du pot 11 et idéalement compris entre 10% et 15% du volume total du pot 11. On peut envisager de réaliser des protubérances sur la paroi interne du pot 11 pour poser la grille 14 dessus. Le pot 11 peut être réalisé en céramique, ou en tôle émaillée.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est possible de continuer à chauffer les aliments à préparer pendant le deuxième temps de préparation, ou non. De plus, le chauffage n'est pas forcément continuel et constant pendant le premier temps de préparation, ni pendant le troisième temps de préparation.

## Revendications

1. Appareil d'extraction de jus, agencé pour extraire des jus à partir d'aliments à préparer en les exposant à une ambiance de vapeur sous pression, comprenant :
- une enceinte d'extraction (10) agencée pour recevoir les aliments à préparer et les exposer à une ambiance de vapeur sous pression,
- des moyens de chauffage de l'enceinte d'extraction (10),
- des moyens de génération de vapeur dans l'enceinte d'extraction (10),
- des moyens de mise sous pression de l'enceinte d'extraction (10),
**caractérisé en ce que** l'appareil comprend des moyens de mesure d'un temps de préparation de l'enceinte d'extraction (10) associés à des moyens de décompression de l'enceinte d'extraction (10), agencés pour :
- opérer, après un premier temps de préparation prédéterminé pendant lequel les aliments à préparer sont chauffés et exposés à l'ambiance de vapeur sous pression, une décompression de l'enceinte d'extraction (10) pendant un deuxième temps de préparation,
- re-comprimer ensuite l'enceinte d'extraction (10) et continuer à chauffer et à exposer les aliments à préparer à l'ambiance de vapeur sous pression pendant un troisième temps de préparation.

2. Appareil d'extraction de jus selon la revendication précédente, **caractérisé** :
- **en ce qu'**il comprend une enceinte principale (20) agencée pour recevoir l'enceinte d'extraction (10) et l'exposer à l'ambiance de vapeur sous pression,
- **en ce que** l'enceinte d'extraction (10) comprend un pot (11) et un couvercle de pot (12), le couvercle de pot (12) étant formé par une paroi avec une surface supérieure, le couvercle de pot (12) comprenant des évents dans la paroi, dépassant de la surface supérieure d'une hauteur prédéterminée.

3. Appareil d'extraction de jus selon la revendication précédente, **caractérisé en ce que** l'enceinte d'extraction (10) comprend un joint d'étanchéité entre le pot (11) et le couvercle de pot (12).

4. Appareil d'extraction de jus selon l'une des revendications précédentes, **caractérisé en ce que** l'enceinte d'extraction (10) comprend une grille (14) agencée pour séparer un volume inférieur de l'enceinte d'extraction (10), dédié à recevoir un jus, d'un volume supérieur de l'enceinte d'extraction (10), dédié à recevoir les aliments à préparer, et **en ce que** le volume inférieur représente moins de 30% de la somme du volume inférieur et du volume supérieur et avantageusement entre 10% et 15% de la somme du volume inférieur et du volume supérieur.

5. Appareil d'extraction de jus selon la revendication précédente, **caractérisé en ce que** la grille (14) repose sur au moins une saillie de l'enceinte d'extraction (10).

6. Appareil d'extraction de jus selon l'une des revendications précédentes, **caractérisé en ce que** l'enceinte d'extraction (10) est en céramique ou en tôle revêtue ou nue.

7. Procédé d'extraction de jus à partir d'aliments à préparer, comprenant les étapes consistant à :
- placer les aliments à préparer dans une enceinte d'extraction (10),
- chauffer et exposer les aliments à préparer à une ambiance de vapeur sous pression pendant un premier temps de préparation,
- opérer une décompression de l'enceinte d'extraction (10) pendant un deuxième temps de préparation,
- chauffer et exposer les aliments à préparer à une ambiance de vapeur sous pression pendant un troisième temps de préparation.

8. Procédé selon la revendication précédente, dans lequel le premier temps de préparation est compris entre 4 et 20 minutes, et dans lequel le deuxième temps de préparation est inférieur à 2 minutes.

9. Procédé selon l'une des revendications 7 ou 8, dans lequel les aliments à préparer sont chauffés pendant le troisième temps de préparation à une température comprise entre 105°C et 120°C.

10. Procédé d'extraction de jus à partir d'aliments à préparer, comprenant les étapes consistant à :
- placer les aliments à préparer dans une enceinte d'extraction,
- chauffer et exposer les aliments à préparer à une ambiance de vapeur sous pression jusqu'à atteindre une température prédéterminée et/ou une pression prédéterminée dans l'enceinte d'extraction,
- opérer une décompression de l'enceinte d'extraction,
- chauffer et exposer les aliments à préparer à une ambiance de vapeur sous pression.

11. Procédé selon la revendication précédente, dans lequel la température prédéterminée est comprise entre 30°C et 120°C, avantageusement entre 60°C et 80°C.

12. Procédé selon l'une des revendications 10 ou 11, dans lequel la pression prédéterminée est comprise entre 1100 mbar et 2000 mbar, avantageusement entre 1100 mbar et 1400 mbar.

## Patentansprüche

1. Einrichtung zur Extraktion von Saft, die eingerichtet ist, um Säfte aus zuzubereitenden Lebensmitteln zu extrahieren, indem diese einer druckbeaufschlagten Dampfumgebung ausgesetzt werden, umfassend:
- einen Extraktionsbehälter (10), der eingerichtet ist, um die zuzubereitenden Lebensmittel aufzunehmen und diese einer druckbeaufschlagten Dampfumgebung auszusetzen,
- Wärmemittel des Extraktionsbehälters (10),
- Dampferzeugungsmittel im Extraktionsbehälter (10),
- Druckbeaufschlagungsmittel des Extraktionsbehälters (10),
**dadurch gekennzeichnet, dass** die Einrichtung Mittel zum Messen einer Zubereitungszeit des Extraktionsbehälters (10) umfasst, die mit Druckminderungsmitteln des Extraktionsbehälters (10) verknüpft sind, die eingerichtet sind, um:
- nach einer vorbestimmten ersten Zubereitungszeit, während der die zuzubereitenden Lebensmittel erwärmt werden und der druckbeaufschlagten Dampfumgebung ausgesetzt werden, eine Druckminderung des Extraktionsbehälters (10) während einer zweiten Zubereitungszeit durchzuführen,
- den Extraktionsbehälter (10) dann erneut mit Druck zu beaufschlagen und während einer dritten Zubereitungszeit damit fortzufahren, die zuzubereitenden Lebensmittel zu erwärmen und der druckbeaufschlagten Dampfumgebung auszusetzen.

2. Einrichtung zur Extraktion von Saft nach dem vorstehenden Anspruch, **dadurch gekennzeichnet,**
- **dass** sie einen Hauptbehälter (20) umfasst, der eingerichtet ist, um den Extraktionsbehälter (10) aufzunehmen und diesen der druckbeaufschlagten Dampfumgebung auszusetzen,
- **dass** der Extraktionsbehälter (10) einen Topf (11) und einen Topfdeckel (12) umfasst, wobei der Topfdeckel (12) aus einer Wand mit einer oberen Fläche gebildet ist, wobei der Topfdeckel (12) Entlüftungsöffnungen in der Wand umfasst, die die obere Fläche um eine vorbestimmte Höhe überragen.

3. Einrichtung zur Extraktion von Saft nach dem vorstehenden Anspruch, **dadurch gekennzeichnet, dass** der Extraktionsbehälter (10) eine Dichtungsverbindung zwischen dem Topf (11) und dem Topfdeckel (12) umfasst.

4. Einrichtung zur Extraktion von Saft nach einem der vorstehenden Ansprüche, **dadurch gekennzeichnet, dass** der Extraktionsbehälter (10) ein Gitter (14) umfasst, das eingerichtet ist, um ein unteres Volumen des Extraktionsbehälters (10), das der Aufnahme eines Safts gewidmet ist, von einem oberen Volumen des Extraktionsbehälters (10), das der Aufnahme der zuzubereitenden Lebensmittel gewidmet ist, zu trennen, und dadurch, dass das untere Volumen weniger als 30% der Summe des unteren Volumens und des oberen Volumens, und vorteilhafterweise zwischen 10% und 15% der Summe des unteren Volumens und des oberen Volumens darstellt.

5. Einrichtung zur Extraktion von Saft nach dem vorstehenden Anspruch, **dadurch gekennzeichnet, dass** das Gitter (14) auf mindestens einem Vorsprung des Extraktionsbehälters (10) aufliegt.

6. Einrichtung zur Extraktion von Saft nach einem der vorstehenden Ansprüche, **dadurch gekennzeichnet, dass** der Extraktionsbehälter (10) aus Keramik oder aus beschichtetem oder nichtbeschichtetem Blech gefertigt ist.

7. Verfahren zur Extraktion von Saft aus zuzubereitenden Lebensmitteln, umfassend die Schritte, die bestehen aus:
- Legen der zuzubereitenden Lebensmittel in einen Extraktionsbehälter (10),
- Erwärmen und Aussetzen der zuzubereitenden Lebensmittel einer druckbeaufschlagten Dampfumgebung während einer ersten Zubereitungszeit,
- Durchführen einer Druckminderung des Extraktionsbehälters (10) während einer zweiten Zubereitungszeit,
- Erwärmen und Aussetzen der zuzubereitenden Lebensmittel einer druckbeaufschlagten Dampfumgebung während einer dritten Zubereitungszeit.

8. Verfahren nach dem vorstehenden Anspruch, wobei die erste Zubereitungszeit zwischen 4 und 20 Minuten beträgt und wobei die zweite Zubereitungszeit kürzer als 2 Minuten ist.

9. Verfahren nach einem der Ansprüche 7 oder 8, wobei die zuzubereitenden Lebensmittel während der dritten Zubereitungszeit auf eine Temperatur erwärmt werden, die zwischen 105 °C und 120 °C beträgt.

10. Verfahren zur Extraktion von Saft aus zuzubereitenden Lebensmitteln, umfassend die Schritte, die bestehen aus:
- Legen der zuzubereitenden Lebensmittel in einen Extraktionsbehälter,
- Erwärmen und Aussetzen der zuzubereitenden Lebensmittel einer druckbeaufschlagten Dampfumgebung bis zum Erreichen einer vorbestimmten Temperatur und/oder eines vorbestimmten Drucks im Extraktionsbehälter,
- Durchführen einer Druckminderung des Extraktionsbehälters,
- Erwärmen und Aussetzen der zuzubereitenden Lebensmittel einer druckbeaufschlagten Dampfumgebung.

11. Verfahren nach dem vorstehenden Anspruch, wobei die vorbestimmte Temperatur zwischen 30 °C und 120 °C, vorteilhafterweise zwischen 60 °C und 80 °C beträgt.

12. Verfahren nach einem der Ansprüche 10 oder 11, wobei der vorbestimmte Druck zwischen 1100 mbar und 2000 mbar, vorteilhafterweise zwischen 1100 mbar und 1400 mbar beträgt.

## Claims

1. Juice extraction device, arranged to extract juice from food to be prepared by exposing it to a pressurised steam environment, comprising:
- an extraction chamber (10) arranged to receive food to be prepared and to expose it to a pressurised steam environment,
- means for heating the extraction chamber (10),
- means for generating steam in the extraction chamber (10),
- means for pressurising the extraction chamber (10),
**characterised in that** the device comprises means for measuring a preparation time of the extraction chamber (10) that are associated with means for decompressing the extraction chamber (10), arranged so as to:
- perform, after a predetermined first preparation time during which the food to be prepared is heated and exposed to the pressurised steam environment, a decompression of the extraction chamber (10) for a second preparation time,
- then re-compress the extraction chamber (10) and continue to heat and to expose the food to be prepared to the pressurised steam environment for a third preparation time.

2. Juice extraction device according to the preceding claim, **characterised in that**:
- it comprises a main chamber (20) arranged to receive the extraction chamber (10) and to expose it to the pressurised steam environment,
- the extraction chamber (10) comprises a pot (11) and a pot cover (12), the pot cover (12) being formed by a wall with an upper surface, the pot cover (12) comprising air vents in the wall, exceeding the upper surface by a predetermined height.

3. Juice extraction device according to the preceding claim, **characterised in that** the extraction chamber (10) comprises a seal between the pot (11) and the pot cover (12).

4. Juice extraction device according to one of the preceding claims, **characterised in that** the extraction chamber (10) comprises a grille (14) arranged to separate a lower volume of the extraction chamber (10), dedicated to receive a juice, from an upper volume of the extraction chamber (10), dedicated to receive food to be prepared, and **in that** the lower volume represents less than 30% of the sum of the lower volume and of the upper volume and advantageously between 10% and 15% of the sum of the lower volume and of the upper volume.

5. Juice extraction device according to the preceding claim, **characterised in that** the grille (14) rests on at least one projection of the extraction chamber (10).

6. Juice extraction device according to one of the preceding claims, **characterised in that** the extraction chamber (10) is made of ceramic or coated or bare metal sheet.

7. Method for extracting juice from food to be prepared, comprising steps consisting of:
- placing the food to be prepared in an extraction chamber (10),
- heating and exposing the food to be prepared to a pressurised steam environment for a first preparation time,
- performing a decompression of the extraction chamber (10) for a second preparation time,
- heating and exposing the food to be prepared to a pressurised steam environment for a third preparation time.

8. Method according to the preceding claim, wherein the first preparation time is comprised between 4 and 20 minutes, and wherein the second preparation time is less than 2 minutes.

9. Method according to one of claims 7 or 8, wherein the food to be prepared is heated for the third preparation time to a temperature comprised between 105°C and 120°C.

10. Method for extracting juice from food to be prepared, comprising steps consisting of:
- placing the food to be prepared in an extraction chamber,
- heating and exposing the food to be prepared to a pressurised steam environment until it reaches a predetermined temperature and/or a predetermined pressure in the extraction chamber,
- performing a decompression of the extraction chamber,
- heating and exposing the food to be prepared to a pressurised steam environment.

11. Method according to the preceding claim, wherein the predetermined temperature is comprised between 30°C and 120°C, advantageously between 60°C and 80°C.

12. Method according to one of claims 10 or 11, wherein the predetermined pressure is comprised between 1100 mbar and 2000 mbar, advantageously between 1100 mbar and 1400 mbar.
